# EUROPÄISCHE PATENTSCHRIFT

(11) **EP 3 319 547 B1**
(45) Veröffentlichungstag und Bekanntmachung des Hinweises auf die Patenterteilung: **17.04.2019**
(21) Anmeldenummer: 16745405.7
(22) Anmeldetag: 30.06.2016
(51) Int. Cl.: A61C 13/00

(54) **ROHLINGSBLOCK UND VERFAHREN ZUR HERSTELLUNG EINER ZAHNRESTAURATION**
BLANK AND METHOD FOR PRODUCING A DENTAL RESTORATION
ÉBAUCHE ET PROCÉDÉ POUR RÉALISER UNE RESTAURATION DENTAIRE

(30) Priorität: 26.11.2015 CH 17302015
(43) Veröffentlichungstag der Anmeldung: 16.05.2018
(73) Patentinhaber: Quarz Partners AG, 8053 Zürich (CH)
(72) Erfinder: MÖRMANN, Werner Hans, 8053 Zürich (CH)
(74) Vertreter: Sutter, Kurt
(86) Internationale Anmeldenummer: PCT/CH2016/000098
(87) Internationale Veröffentlichungsnummer: WO 2017/088073

(56) Entgegenhaltungen:
- DE-A1-102007 013 675
- US-A1- 2002 074 675
- US-B2- 8 844 139

## Beschreibung

### Gebiet der Erfindung

Die Erfindung betrifft ein Verfahren zum Bearbeiten eines Rohlingsblocks zum Herstellen einer Zahnrestauration mittels automatisierter abrasiver Bearbeitung in einem Bearbeitungsgerät. Die Erfindung betrifft auch eine Kombination aus einem Bearbeitungsgerät und einem Rohlingsblock zur Durchführung dieses Verfahrens sowie die Verwendung eines Rohlingsblocks im genannten Verfahren.

### Hintergrund

Die Versorgung von Zähnen mit CAD/CAM-Restaurationen stellt eine anspruchsvolle Arbeit dar, die sich 2015, 30 Jahre nach der ersten Anwendung am Patienten, zu einer hochpräzisen Methode in der restaurativen und prothetischen Zahnheilkunde entwickelt hat.

Ein konventioneller Rohlingsblock ist aus EP0160797 für ein dentales CAD/CAM System bekannt. Solche Rohlingsblöcke werden beispielsweise im Cerec CAD/CAM Verfahren (siehe EP0054785) in den Geräten der Firma Sirona Dental Systems (Bensheim, Deutschland; http://www.sirona.com) verarbeitet. Die Rohlinge bestehen aus verschiedenen Restaurationsmaterialien und kommen in unterschiedlichen Grössen zur Anwendung, insbesondere zur Versorgung von Zähnen mit Inlays, Onlays, Front- und Seitenzahn-Teil- und Vollkronen und Veneers, aber auch für die Herstellung von Brücken, Brückengerüsten, Brückenverblendungen, provisorischen Brücken, Abutments etc. (Ender und Mehl, Cerec Basiswissen 3.80; ein klinischer Leitfaden, www.cerec.uzh.ch/). Blöcke dieser Art werden beispielsweise von den Firmen VITA Zahnfabrik (www.vita-zahnfabrik.de) und Ivoclar Vivadent (ivoclarvivadent.com) hergestellt.

Bei der Konstruktion von Restaurationen schlägt das herkömmliche CAD-Programm die Lage der Trennstelle auf einer der Aussenflächen der konstruierten Restauration vor. Bei Einlagefüllungen (Inlays) beispielsweise erfolgt die Platzierung der Trennstelle auf einer Glattfläche, nämlich auf der Approximalfläche eines Inlays. Der Formschleifprozess beginnt, nach der Kalibration der Schleifinstrumente am Blockhalter und am Materialblock, am freien Ende des Rohlings und endet in einem ca. 2 x 3 mm im Querschnitt messenden und ca. 1-3 mm langen Trennsteg, der das restaurative Werkstück mit dem unbearbeiteten Restblock verbindet. Wird der Trennsteg weiter gegen axial abgetragen, so bricht er, und sein Ansatz bleibt auf der Approximalfläche des im Übrigen fertig bearbeiteten Werkstücks zurück. Als besonders nachteilig erweist sich dieses Vorgehen beispielsweise, wenn der Ansatz der Trennstelle mit einem Überstand von ca. 1 - 2 mm im Bereich einer approximalen Kontaktfläche zum Nachbarzahn zurückbleibt, die der Zahnarzt/Zahntechniker zuvor auf ca. 25 Mikrometer genau in Kontakt mit der Nachbarzahnfläche konstruiert hat.

Der Zahnarzt muss dann, z.B. bei der "chairside"-Anwendung des CAD/CAM Systems direkt am Patienten, den von der Trennstelle zurückbleibenden Materialüberschuss im Bereich des Approximalkontaktes mittels abrasiven Werkzeugen manuell so lange näherungsweise abtragen, bis sich das Inlay einfügen lässt. Üblicherweise sind dazu zwei und mehr Schleifvorgänge und Einproben erforderlich. Diesen Teil der Behandlung empfinden beide, der Patient und der Zahnarzt, als unangenehm, und er ist für beide zeitraubend. Zu wenig Abtrag führt zum Klemmen der Restauration und dadurch zu gestörter Passung in der Kavität an den Rändern und den okklusalen Kaukontakten. Bei zu viel Materialabtrag geht der Kontakt verloren. In diesem Falle gilt die Restauration als insuffizient und muss neu hergestellt werden.

Auch bei anderen Restaurationstypen wie Veneers, Teilkronen, Vollkronen und Brücken, sowie Kronen- und Brückengerüsten, subtraktiv hergestellten Verblendteilen und Abutments, stellt das manuelle Abtragen des über das Niveau der anatomisch-morphologischen Restaurationsflächen oder des über konstruierte Fügeflächen hinausragenden Trennstellenmaterials eine arbiträre manuelle Massnahme dar, welche die Konturen des Werkstücks oder dessen Passform beinträchtigen oder kritische Randpartien verletzen kann.

US 8844139 zeigt einen derartigen Rohling mit einem Halter und einem restaurativen Segment, wobei letzteres in einem Bearbeitungsgerät bearbeitet wird.

### Darstellung der Erfindung

Mit der vorliegenden Erfindung soll das Einpassen des subtraktiv mittels CAM gefertigten Werkstücks vereinfacht, verkürzt und präziser gestaltet werden. Dies ist insbesondere in der direkten Anwendung durch den Zahnarzt in der Praxis wichtig, da dort die Behandlung unter Zeitdruck in einem Zuge während einer Patientensitzung ohne zahntechnische Zwischenschritte durchgeführt wird.

Diese Aufgabe wird von der in den unabhängigen Ansprüchen definierten Erfindung gelöst.

Die Erfindung betrifft ein Verfahren zum Bearbeiten eines Rohlingsblocks zwecks Herstellung eines dentalen Werkstücks. Der Rohlingsblock weist ein restauratives Segment aus bearbeitbarem Zahnersatzmaterial auf, sowie einen Halter zum Einspannen des Rohlingsblocks in das Bearbeitungsgerät, wobei zwischen dem Halter und dem restaurativen Segment ein Trennsegment aus einem bearbeitbarem Trennsegmentmaterial angeordnet ist, wobei sich das Trennsegmentmaterial visuell vom Zahnersatzmaterial unterscheidet. Das Verfahren umfasst die folgenden Schritte:
- Bereitstellung eines Datensatzes, der eine Aussenform des Werkstücks beschreibt: Dieser Datensatz wird mittels dem Fachmann bekannten Verfahren, beispielsweise mittels einer Kamera im Mundraum, erfasst.
- Numerische Einpassung der Aussenform des Werkstücks in das restaurative Segment: Diese Einpassung, z.B. im CAD-System, erfolgt derart, dass eine mindestens ebene, vorzugsweise konvexe Oberfläche der Aussenform in die Interfacefläche zwischen dem Trennsegment und dem restaurativen Segment zu liegen kommt, vorzugsweise tangential.
- Mechanisches Abtragen von Material des restaurativen Segments: Hierbei wird das Material des restaurativen Segments bis zur numerisch eingepassten Aussenform abgetragen, mit Ausnahme des Trennstegsockels um den Approximalkontakt, der während der Bearbeitung die sichere Verbindung mit dem Trennsegment garantiert. In dieser Phase wird das restaurative Werkstück mit Vorteil über den Trennsteg mit dem Halter in einem CAM-Bearbeitungsgerät gehalten. Der Trennsteg besitzt anfänglich einen Durchmesser von ca. 2 bis 3 mm und wird bis zum Abstich kontinuierlich bis zu seinem Bruch reduziert.
- Entfernen des (verbleibenden) Trennsegments vom restaurativen Werkstück: Dies kann z.B. mittels abrasiven Verfahren, mittels chemischer Auflösung des verbleibenden Trennstegfragmentes, Verbrennen des Trennstegfragmentes, Schmelzen des Trennstegfragmentes oder Auftrennen des Verbunds zwischen dem verbleibenden Trennstegfragment und dem restaurativen Werkstück erfolgen.
- Abtragen des Trennstegsockels um den Approximalkontakt: Dadurch kann auch in diesem Bereich das Werkstück in seiner Form an die gewünschte Aussenform angepasst werden.

Im Verfahren verwendet wird ein Rohlingsblock zum Herstellen einer Zahnrestauration, mittels automatisierter abrasiver Bearbeitung in einem Bearbeitungsgerät bereitgestellt. Der Rohlingsblock weist ein restauratives Segment aus bearbeitbarem Zahnersatzmaterial auf, sowie einen Halter zum Einspannen des Rohlingsblocks in das Bearbeitungsgerät. Weiter ist zwischen dem Halter und dem restaurativen Segment ein Trennsegment aus einem im Bearbeitungsgerät bearbeitbarem Trennsegmentmaterial angeordnet. Dabei unterscheidet sich das Trennsegmentmaterial visuell vom Zahnersatzmaterial.

Unter einem "bearbeitbaren" Material ist dabei ein Material zu verstehen, welches mittels abrasiver Bearbeitung in einem CAM-Bearbeitungsgerät formgebend bearbeitet werden kann.

Somit ist zwischen dem Halter und dem restaurativen Segment des Rohlings ein nicht-restaurativer Materialabschnitt, das Trennsegment, angeordnet, das sich an der Interfacefläche zum restaurativen Segment visuell absetzt, vorzugsweise visuell scharf absetzt. Dadurch wird die exakte Nachbearbeitung des Werkstücks in der weiter unten beschriebenen Weise vereinfacht.

Insbesondere besitzt das Trennsegment eine zum restaurativen Segment unterschiedliche Farbe. Im vorliegenden Text sind dabei unter Farbe nicht nur Farbton, Farbsättigung und Helligkeit, sondern auch Transluzenz, Tranzparenz und Opazität zu verstehen.

Das Trennsegmentmaterial kann sich gegenüber dem Zahnersatzmaterial lediglich in der Pigmentierung unterscheiden, solange sich die beiden Materialien optisch klar voreinander absetzen. Das Trennsegmentmaterial kann aber auch aus einem anderen Material als das Zahnersatzmaterial bestehen, d.h. sich von diesem nicht nur in der Pigmentierung, sondern auch in der übrigen Zusammensetzung unterscheiden. Insbesondere können das restaurative Segment aus Keramik und das Trennsegment aus einem Polymermaterial bestehen.

Restaurative Keramiken und Polymer-basierte Materialien unterscheiden sich sehr stark in ihrer Härte, z.B. Zirkonoxidkeramik mit einer Martenshärte (MH) von 7996 gegenüber ungefülltem Polymer mit MH 181 (siehe Mörmann W, Stawarczyk, Ender A, Sener B, Attin Th, Mehl A."Wear characteristics of current aesthetic dental restorative CAD/CAM materials: Two-body wear, gloss retention, roughness and Martens hardness. Journal of the Mechanical Behaviour of Biomedical Materials 20 (2013) 113-125), wodurch sie sich auch in ihrer Bearbeitbarkeit klar voneinander absetzen. Die Erfahrung zeigt, dass der Trennsteg bei Polymer-basierten Materialien grazil gestaltet werden kann. Damit kann auch konstruktiv auf den breiten Trennstegsockel im restaurativen Segment, d.h. auf der Restaurationsoberfläche, verzichtet werden wie er bisher bei der herkömmlichen CAM-Bearbeitung von Keramik zur Anwendung kommt. Der geometrisch definierte Umriss des Trennsteges kann bei Polymer-basiertem Trennsegment ohne Vergrösserung des Umfangs exakt an der Interface-Fläche zum restaurativen Segment in das aus dem restaurativen Segment geformte Werkstück übergehen, wo es von dessen Oberfläche entfernt werden kann. Die auf dem restaurativen Werkstück ebene Interfacefläche wird dadurch vorteilhaft auf ein Minimum reduziert und kann mit geringer manueller Nacharbeitung der antatomisch-morphologischen Oberfläche angepasst werden.

Im anatomisch-morphologischen Regelfall kann die Interfacefläche von Zahnrestaurationen in der Zahnreihe vorteilhaft im Zentrum des konstruierten natürlichen Approximalkontaktes liegen. Im Falle von Zahnkippungen und anatomisch-morphologischen Abweichungen der Nachbarzähne, die nicht plastisch korrigiert werden können, kann es vorkommen, dass die Form der Restauration approximal in Richtung der Zahnreihenachse über den konstruierten Kontakt hinausgeht. In diesem Fall berücksichtigt dies die numerische Einpassung der Aussenform des Werkstücks in das restaurative Segment und platziert die mesio-distal am weitesten ausgedehnte Aussenkontur an der Interface-Fläche des restaurativen Segmentes.

Das Trennsegment ist mit dem restaurativen Segment und/oder mit dem Halter mit Vorteil verklebt, da eine solche Verbindung konstruktiv einfach herstellbar ist. Unter "verklebt" ist dabei eine Verbindung zu verstehen, welche über ein zunächst fliessfähiges und danach auszuhärtendes Adhäsiv erfolgt. Dabei kann es sich z.B. um einen transparenten Sofortklebstoff, einen Leim, einen Heissleim oder um ein Lot, insbesondere ein Glaslot, handeln.

Die Dicke des Trennsegments, d.h. dessen Ausdehnung in der Richtung zwischen dem Halter und dem restaurativen Segment, beträgt mit Vorteil mindestens 0.5 mm, insbesondere mindestens 1 mm, so dass das Bearbeitungswerkzeug das Trennsegment bearbeiten kann. Die Dicke ist hierzu mit Vorteil so gross zu bemessen, dass das Bearbeitungswerkzeug Platz hat.

Nach oben ist die Dicke des Trennsegments vorzugsweise durch einen Wert von 3.0 mm beschränkt, damit der nach der Bearbeitung verbleibende Steg nicht zu lang wird.

Weiter kann der Rohlingsblock eine optische Markierung aufweisen, welche in der Interfacefläche zwischen dem Trennsegment und dem restaurativen Segment eine Stelle für einen zu schaffenden Approximalkontakt kennzeichnet. Mit anderen Worten ist der Rohling derart markiert, dass für den Benutzer ein definierter Bereich der Interfacefläche sichtbar markiert wird. Dieser kann als Referenzfläche für die Nachbearbeitung, insbesondere für die Entfernung des Trennstegrestes bzw. für die Entfernung eines nach Eliminieren des Trennstegs am restaurativen Segment verbleibenden Trennstegsockels, genutzt werden.

Mit Vorteil befindet sich diese Markierung in einer Kernachse des Rohlingsblocks, welche eine Bearbeitungsachse des restaurativen Segments bildet. Mit Vorteil bildet die Kernachse sogar eine Symmetrieachse des ganzen Rohlingsblocks (wobei allfällige nicht-symmetrische Ausformungen z.B. im Bereich des Halters zur Orientierung des Rohlingsblocks im Bearbeitungsgerät hierbei unberücksichtigt bleiben).

Die Markierung kann von einer Einfärbung gebildet werden, welche im Trennsegment, im restaurativen Segment und/oder an der Interfacefläche angeordnet ist. Unter "Einfärbung" ist dabei eine zonenweise Farbgebung der jeweiligen Teile zu verstehen. Die Markierung kann z.B. von einem im Vergleich zu seiner Umgebung dunkleren, helleren, andersfarbigen, durchsichtigeren oder opakeren Bereich gebildet werden.

Insbesondere kann sich die Markierung ausgehend von der Interfacefläche und senkrecht zu dieser durch mindestens einen Teil des Trennsegments und/oder des restaurativen Segments erstrecken, mit Vorteil über eine Tiefe von mindestens 0.1 mm, insbesondere mindestens 1 mm. Die Markierung kann im Trennsegment die Kernachse und im restaurativen Segment den Umriss des Trennstegsockels markieren. Dadurch wird für den Benutzer bei der Nachbearbeitung eine Orientierung im Trennsegment bzw. im restaurativen Segment möglich.

In einer bevorzugten Ausführung, insbesondere bei Rohlingen für die Verwendung im Seitenzahnbereich, erstreckt sich die Markierung durch das ganze restaurative Segment. In diesem Falle ist sie mit Vorteil dunkler als der Rest des restaurativen Segments, um so dem restaurativen Segment eine natürlichere Farbgebung zu vermitteln. Dabei kommt die dunkel farbmarkierte Markierung im Wesentlichen unter der mesio-distalen Zentralfissur zu liegen und färbt diese vorteilhaft ein. Zwar tritt die Farbmarkierung dann auch auf der gegenüberliegenden Approximalfläche zu Tage, wo sie aber im Kontaktbereich innerhalb der Seitenzahnreihe von aussen nicht sichtbar ist.

Im restaurativen Segment kann der Umriss des Trennstegsockels visuell wahrnehmbar markiert werden, um die kontrollierte manuell abrasive Entfernung des Trennstegsockels von der anatomisch geformten Oberfläche zu erleichtern.

Somit ist es von Vorteil, wenn sich die Markierung zonenweise über einen Bereich mit einem Durchmesser von mindestens 1 mm parallel zur Interfacefläche erstreckt, zonenweise deshalb, weil sie die Lage des Approximalkontakts besonders kennzeichnen sollte, aber zusätzlich auch den Umriss des Trennstegsockels.

Die zentral axiale Markierung im restaurativen Segment kann ergänzend zur farblichen Charakterisierung der Restauration, beispielsweise einer Vollkrone, von mehreren Bereichen unterschiedlicher Farben umgeben sein, d.h. von Bereichen, welche zumindest teilweise untereinander und von der Markierung in Farbton, Farbsättigung, Helligkeit und/oder Transluzenz bzw. Opazität unterscheiden. Damit kann ein der natürlichen Erscheinung beispielsweise von Vollkronen im Seitenzahnbereich nahe kommendes Werkstück erzeugt werden. Die zusätzliche Farbabstufung kann die visuelle Erfassung des zu entfernenden Trennstegsockels vereinfachen.

Das Trennsegment kann (in Projektion parallel zur Kernachse) den gleichen Umriss aufweisen wie der Halter und/oder (vorzugsweise) wie das restaurative Segment.

Das Trennsegment ist mit Vorteil aus mindestens einem Material umfassend Glas, Kunststoff, insbesondere Polymer, und Keramik, und es kann transparent, opak und/oder eingefärbt sein. Beispielsweise kann ein Acrylatpolymer eingesetzt werden.

Demgegenüber besteht das restaurative Segment mit Vorteil zumindest überwiegend einem Material aus der Gruppe umfassend Keramik, Komposit, Polymer und Hybridkeramik. Eine Hybridkeramik ist eine Netzwerkstruktur aus Polymer und Keramik. Ein Komposit bezeichnet eine polymere Kunststoffmatrix mit anorganischen Füllkörpern.

Polymerbasierte Materialien lassen erfahrungsgemäss im Vergleich zu den spröderen Keramiken vorteilhaft kleinere Trennstegdurchmesser zu. Für Rohlinge mit restaurativem Keramiksegment empfiehlt sich deshalb Polymer bzw. Polymerbasiertes Material als Trennsegment.

Am oder im Trennsegment kann eine Kodierung angeordnet sein, insbesondere in Form einer mittels Färbung oder Oberflächenrelief erzeugten Kodierung (z.B. in Form von einer Schrift, eines Strichcodes oder eines QR-Codes) oder in Form eines elektronisch auslesbaren Datenträgers (z.B. eines RF-ID-Chips).

Diese Kodierung kann z.B. im Bearbeitungsgerät ausgelesen werden. Sie kann zur Identifikation des Rohlingstyps dienen, wodurch beispielsweise eine erforderliche materialspezifische Bearbeitungsstrategie ausgelöst werden kann bzw. die Verarbeitbarkeit des Rohlings im Gerät festgestellt werden kann.

Mit Vorteil erfolgt vor, nach oder während dem formgebenden mechanischen Abtragen von Material des restaurativen Segments auch ein mechanisches Abtragen von Material des Trennsegments, und zwar derart, dass ein Trennsteg zwischen dem Halter und dem erwähnten Bereich des restaurativen Segments bestehen bleibt.

Die Erfindung betrifft auch die Kombination aus einem Bearbeitungsgerät und einem Rohlingsblock zum Durchführen des Verfahrens, wobei der Rohlingsblock ein restauratives Segment aus bearbeitbarem Zahnersatzmaterial aufweist, sowie einen Halter zum Einspannen des Rohlingsblocks in das Bearbeitungsgerät, wobei zwischen dem Halter und dem restaurativen Segment ein Trennsegment aus einem bearbeitbarem Trennsegmentmaterial angeordnet ist, wobei sich das Trennsegmentmaterial visuell vom Zahnersatzmaterial unterscheidet, und wobei das Bearbeitungsgerät aufweist
- eine Befestigungsvorrichtung zur Befestigung des Halters des Rohlings.
- mindestens ein abrasives Bearbeitungswerkzeug zum Bearbeiten des restaurativen Elements und des Trennsegments und
- Antriebsvorrichtungen, um den Rohling und das Werkzeug zu Bearbeitung gegeneinander zu bewegen.

Weiter besitzt die Vorrichtung eine Steuerung ausgestaltet zum Durchführen der Schritte des Verfahrens.

Die natürlichen Approximalkontakte werden in der Regel durch konvexe Nachbarzahnflächen gebildet. Die Approximalkontakte der Seitenzähne liegen nach der Regel etwas bukkal von der Zahnreihenmittellinie und können am Übergang zwischen dem mittleren und dem bukkalen Drittel der Zahnbreite zwischen der oralen und bukkalen Höckerspitze liegen.

Stellungsanomalien der Zähne und/oder vorbestehende Restaurationsarbeiten können diese Situation ändern, können aber durch vorbereitende plastische Massnahmen am Zahnschmelz oder an Restaurationsflächen der Nachbarzähne korrigiert werden.

Das Einpassen der Aussenform des Werkstücks in das restaurative Segment des Rohlings erfolgt, wie erwähnt, zunächst numerisch, beispielsweise am Ende der CAD-Konstruktion. Dabei kann die genaue Lage vom Benutzer oder zur Zeitersparnis vorteilhaft automatisch von der Software festgelegt werden.

Die automatische Platzierung ist insbesondere dann möglich, wenn das Werkstück in eine, wie erwähnt, approximal regelkonforme anatomische Kontaktsituation entlang der Zahnreihenachse, bzw. parallel zur Zahnreihenachse eingepasst werden kann. In diesem Fall wird der Trennsteg mit Vorteil in den Bereich des Approximalkontakts zum Nachbarzahn gelegt.

Soll beispielsweise ein Inlay mit einer Approximalfläche gefertigt werden, so wird der Kontaktbereich der Approximalfläche in die Interfacefläche gelegt, und zwar mit Vorteil dort, wo die oben erwähnte Kernachse die Interfacefläche schneidet.

Die zentrale Achse des Trennstegs stimmt vorzugsweise mit der Kernachse des Rohlingsblocks überein.

Die Grenzfläche des Approximalkontaktes wird dann vorteilhaft mit der Interfacefläche zur Deckung gebracht, d.h. die Approximalfläche liegt tangential an der Interfacefläche an. Dadurch wird die Approximalkontaktfläche des Inlays konstruktionsgenau auf die Grenzfläche des restaurativen Segmentes festgelegt. Diese wird gleichzeitig mit der Grenzfläche des Trennsegmentes zur Deckung gebracht. Der Trennsteg wird dadurch konstruktiv in das Trennsegment gelegt.

Der beim Abstich oder nach der Fraktur des Trennsteges auf der Approximalfläche haftende Trennstegrest kann dann aufgrund seiner visuellen Unterscheidbarkeit manuell präzise auf das Niveau der konstruierten Approximalkontaktfläche abgeschliffen werden.

Ist das Trennsegment bzw. der Trennstegrest durch klebende Haftung mit dem Rohlingsblock bzw. dem Restaurationswerkstück verbunden, so kann der auf der Approximalfläche haftende Rest des Trennsteges durch Aufhebung der Klebehaftung abgelöst werden. Falls das Material des Trennsegmentes chemisch auflösbar oder brennbar ist, kann es auf diese Art entfernt werden. Beispielsweise ist das für das Trennstegsegment verwendbare transparente Acrylatpolymer VITA CAD-Waxx (VITA Zahnfabrik) rückstandsfrei verbrennbar, was mit einem Bunsenbrenner einfach durchführbar ist.

Nach dem Entfernen des Trennstegrestes vom restaurativen Segment verbleibt im erwähnten Bereich rings um den Kontaktpunkt auf dem restaurativen Segment ein Trennstegsockel, der manuell nachbearbeitet werden muss. Dieser Trennstegsockel ist auf der zu erzielenden Aussenform des Werkstücks sozusagen aufgesetzt.

Beispielsweise kann ein Inlay bereits in dieser Form mit noch vorhandenem Trennstegsockel zur Prüfung des Kontaktes und der Werkstück-Passung einprobiert werden.

Der Trennstegsockel wird insbesondere durch manuelles Schleifen an die gewünschte Aussenform der kontaktfernen Approximalfläche angepasst.

Während bei den bekannten Rohlingen die formgebende Bearbeitung mit dem Anschliff am freien Ende des restaurativen Segmentes beginnt, liegt der Beginn der formgebenden Bearbeitung beim erfindungsgemässen Rohling je nach der axialen Länge des restaurativen Werkstücks bevorzugt weiter innerhalb des restaurativen Segmentes und geht an der Interfacefläche zum Trennsegment in dieses zur Formung des Trennsteges über. Eine Verkürzung des restaurativen Segmentes um die axiale Länge des Trennsegmentes kann dadurch möglich werden.

Der Rohlingsblock kann z.B. eingesetzt werden für die Fertigung von Restaurationen aus Silikatkeramiken, Glaskeramiken, transluzenter Zirkonoxidkeramik, Komposit, Polymer und Hybridkeramik. Er kann auch verwendet werden, um Kronen- und Brückengerüste und prothetische Stegkonstruktionen mit Aluminiumoxid- und Zirkonoxid-Keramiken herzustellen.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine schematische Darstellung eines dentalen CAD/CAM Rohlingsblocks mit einem intermediären Trennsegment zwischen Blockhalter und restaurativem Segment sowie mit halbperspektivischer Darstellung einer Inlay CAD-Konstruktion für die subtraktive CAM-Herstellung,
Fig. 2 eine schematische kauflächenseitige Ansicht eines Inlays und des Trennsteges am Ende des subtraktiven CAM-Formschleifprozesses mit einem typischen Bruchspalt im Trennsteg,
Fig. 3 eine kauflächenseitige schematische Teilansicht aus Fig.2 des Trennsteg-Restes auf dem Trennstegsockel der Approximalfläche des Inlays,
Fig. 4 eine kauflächenseitige schematische Darstellung der Trennteile des Rohlings mit dem Trennsegment nach der Fraktur des Trennsteges und nach Ablösung des Trennsteg-Restes vom Trennstegsockel auf der Approximalfläche des Inlays mit durchgehender Farbkodierung des Rohlingsblocks ausgehend vom Bereich des approximalen Trennstegsockels,
Fig. 5 eine kauflächenseitige schematische Darstellung des CAMgefertigten Inlays mit bestehendem farbkodierten Trennstegsockel, wobei sich die Farbkodierung longitudinal durch das Inlay zieht,
Fig. 6 eine kauflächenseitige schematische Darstellung des in den Zahn eingesetzten Inlays mit der konstruktionsexakten farbkodiertem zentralen Kontaktfläche des Approximalkontaktes und dem noch vollständigen Trennstegsockel,
Fig. 7 eine schematische Darstellung der Approximalfläche mit der konstruktionsexakten farbkodierten zentralen Kontaktfläche des Approximalkontaktes und der äusseren Grenze des Trennstegsockels,
Fig. 8 eine schematische Darstellung des in die Zahnkavität eingesetzten Inlays mit dem konstruktionsexakten zentralen Approximalkontakt auf der Trennstegseite nach der kontrollierten abrasiven Entfernung der zirkulären Trennsockelanteile auf das Niveau der Approximalfläche,
Fig. 9 eine schematische Darstellung eines Rohlings für eine Seitenzahnkrone mit Trennsegment und im restaurativen Segment durchgehender zentraler Farbkodierung ausgehend vom Trennstegsockelbereich und dazu ergänzender zirkulär parallel verlaufender Farb- bzw. Transluzenz- und Opazitätszonen,
Fig. 10 eine weitere Ausführung des Rohlingsblocks, bei welcher die halterseitige Oberfläche des restaurativen Segments 4 zur Positionsabtastung zugänglich ist und
Fig. 11 ein Bearbeitungsgerät zum Durchführen des Verfahrens.

### Wege zur Ausführung der Erfindung

### Dentaler CAD/CAM Rohlingsblock, Trennsegment

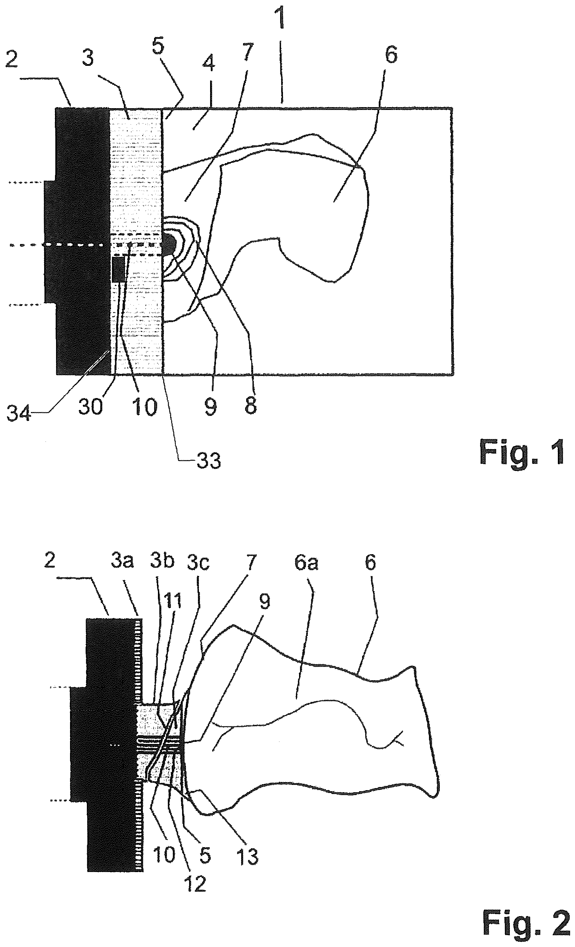

**Fig. 1** zeigt die schematische Darstellung einer Ausführung eines dentalen CAD/CAM Rohlingsblocks 1 zur Herstellung von Zahnrestaurationen mit einem Halter 2, einem Trennsegment 3 und einem restaurativen Segment 4, die eine mechanische Einheit bilden und so in die Formbearbeitungsmaschine (zwecks Schleifen und/oder Fräsen) eingespannt werden. Dabei dient der Halter 2 der Befestigung in der Formbearbeitungsmaschine.

Das restaurative Segment 4 besteht beispielsweise aus einem der eingangs erwähnten, dem Fachmann bekannten bearbeitbaren Zahnersatzmaterialien.

Das Trennsegment 3 besteht aus einem Trennsegmentmaterial, beispielsweise gemäss einem oder oben aufgeführten Beispiele.

Der Halter 2 besteht beispielsweise aus Metall. Er bildet einen Schaft, der im Bearbeitungswerkzeug eingespannt werden kann.

Der Halter 2, das Trennsegment 3 und das restaurative Segment 4 sind an einer Interfacefläche 5 z.B. stoffschlüssig durch Kleben miteinander verbunden. Die entsprechende erste Klebeverbindung zwischen dem restaurativen Segment 4 und dem Trennsegment 3 ist in Fig. 1 mit der Bezugsziffer 33 gekennzeichnet, und die zweite Klebeverbindung zwischen dem Halter 2 und dem Trennsegment 3 mit der Bezugsziffer 34.

Mit Vorteil beträgt die Dicke der Klebeverbindungen 33, 34 mindestens 2 µm und/oder höchstens 125 µm.

Die Klebeverbindungen 33, 34 bestehen vorteilhaft aus einem anderen Material als das Trennsegment. Insbesondere kann so das Material für das Trennsegment so besser an seine Anforderungen bezüglich Bearbeitbarkeit und Stabilität angepasst werden.

Das zu formende Werkstück, beispielsweise ein dreiflächiges Inlay 6, ist mit seinem Konstruktionsplan halbperspektivisch im Block dargestellt. Dabei ist seine Approximalfläche 7 mit einem Kontaktbereich 8 ersichtlich. Im fertigen Zustand wird das Inlay 6 den angrenzenden Zahn in einem Approximalkontakt berühren, dessen Zentrum mit der Bezugsziffer 9 gekennzeichnet ist.

Für die formgebende Bearbeitung wird der Datensatz, welcher die Aussenform des zu konstruierenden Inlays 6 beschreibt, mit seinem Kontaktbereich 8 und dem kontaktbildenden Zentrum des Approximalkontaktes 9 numerisch zur Deckung mit der Grenzfläche 5 des restaurativen Segmentes 4 an der Interfacefläche 5 zum Trennsegment 3 gebracht.

Das Zentrum des Approximalkontaktes 9 auf der Approximalfläche 7 des Inlays wird vorzugsweise axial deckungsgleich zu einer Kernachse 10 in der Mitte des Trennsegmentes 3 positioniert. Die Kernachse 10 bildet auch eine Mittelachse des restaurativen Segments 4.

In Fig. 1 ebenfalls eingezeichnet ist eine Kodierung 30, welche, wie erwähnt, z.B. eine Färbung (ein Aufdruck), ein Oberflächenrelief oder ein elektronisch auslesbarer Datenträger sein kann.

**Fig. 2** zeigt in einer schematischen Darstellung die Ansicht der Kaufläche 6a des aus dem restaurativen Segment 4 durch den CAM Prozess subtraktiv ausgearbeiteten Inlays 6.

Das Trennsegment 2 wurde durch die subtraktive Bearbeitung auf eine halterseitige Restschicht 3a und einen Trennsteg 3b, 3c reduziert. Der Trennsteg 3b, 3c verbindet die halterseitige Restschicht 3a mit dem verbleibenden restaurativen Segment 4.

Der Trennsteg 3b, 3c wird mittels "Abstich" zerbrochen. In Fig. 2 ist die dabei entstehende, in okkluso-zervikaler Richtung verlaufende typische Frakturlinie 11 eingezeichnet.

Die Kernachse 10 markiert mit ihrer Kernendfläche 12 den Übergang zum Zentrum des Approximalkontaktes 9 auf der Approximalfläche 7 des Inlays.

Die Klebeverbindung 33 an der Interfacefläche 5 gewährleistet die Haftung zwischen dem Trennsteg-Rest 3c und der Oberfläche eines Trennstegsockels 13 auf der Approximalfläche 7 des Inlays 6. Dieser Trennstegsockel 13 bezeichnet denjenigen Bereich des restaurativen Segments 4, der an den Trennsteg-Rest 3c angrenzt und noch über die zu erzielende Form des zu formenden Werkstücks hinaussteht.

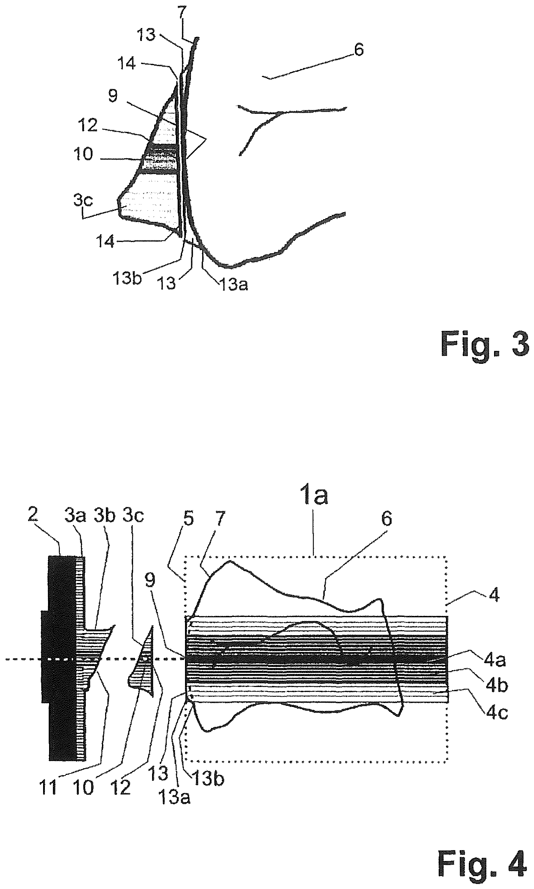

**Fig. 3** zeigt schematisch die Kauflächen-seitige Teilansicht des Inlays 6 mit der Teilkontur der Approximalfläche 7, auf welcher der aus dem restaurativen Segment 4 geformte Trennstegsockel 13 den Trennstegrest 3c trägt.

Die Kernachse 10 des Trennsteg-Restes 3c ist farblich abgesetzt und markiert mit ihrer Kernendfläche 12 an der Interfacefläche zur Klebefuge 14 den Übergang zum Approximalkontakt 9 auf der Approximalfläche 7 des Inlays 6.

Die Grenzpunkte 13a und 13b markieren den äusseren Approximalkontakt-fernen Umriss des Trennstegsockels 13 auf der anatomisch verlaufenden Approximalfläche 7 des zu fertigen Werkstücks.

**Fig. 4** zeigt getrennte Elemente eines Rohlings mit: dem Halter 2, der Restschicht des Trennsegmentes 3a, mit dem frakturierten Trennstegansatz 3b und der Frakturlinie 11, dem vom restaurativen Segment 4 gelösten Trennstegrest 3c mit der Kernachse 10, der Kernachsenendfläche 12, dem Zentrum des Approximalkontaktes 9, der Interfacefläche bzw. Grenzfläche 5 des restaurativen Segmentes 4, der anatomischen Kontur der Approximalfläche 7 des Inlays 6, den inneren und äusseren Umrissgrenzen 13a und 13b des Trennstegsockels 13.

Weiter zeigt Fig. 4 als Variante visuell unterscheidbare Farbzonen 4a, 4b, 4c, welche sich ausgehend vom Trennstegsockel 13 und der Interfacefläche 5 über die gesamte Länge des restaurativen Segmentes 4 erstrecken. Diese Farbzonen werden vom Hersteller des Rohlingsblocks in das restaurative Segment 4 eingebracht. Sie sind mit Vorteil symmetrisch um die Kernachse des Rohlingsblocks 1 angeordnet.

Durch die Kennzeichnung der Oberfläche des Trennstegsockels 13 mit den Farbzonen 4a, 4b und 4c kann die manuell abrasive Entfernung des Trennsockels 13 von der anatomischen Approximaloberfläche 7 zwischen dem Approximalkontakt 9 und dem äusseren Umriss 13b kontrolliert erfolgen.

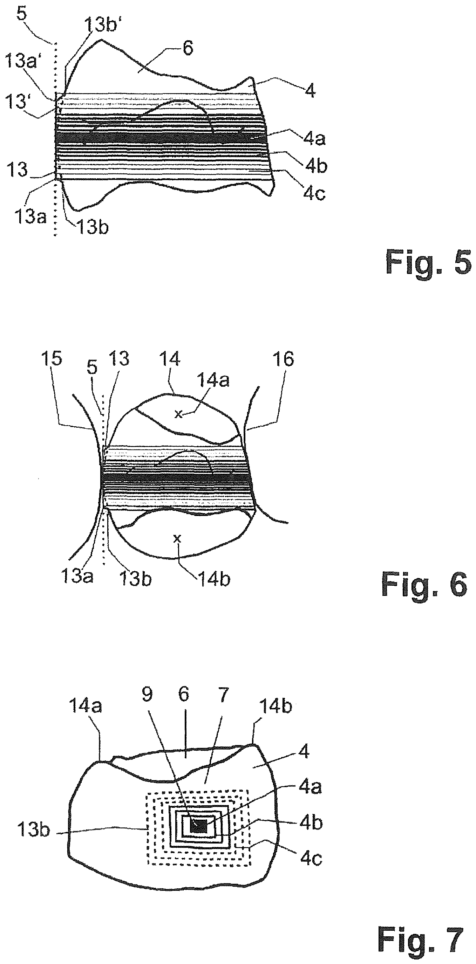

**Fig. 5** zeigt die Kauflächen-seitige Ansicht des aus dem restaurativen Segment 4 gefertigten Inlays 6 mit dem zwischen der Interfacefläche 5 und der anatomischen Kontur des Inlays 6 zwischen den inneren Umrissgrenzen 13a und 13a' aufgesetzten Oberfläche des Trennstegsockels 13 und mit den äusseren Umrissgrenzen 13b und 13b', zwischen denen die Farbschichten 4a, 4b und 4c angeordnet sind.

**Fig. 6** zeigt schematisch das in den Zahn 14 zur Probe eingesetzte Inlay in Kontakt mit den Nachbarzahnkonturen 15 und 16. Der konstruktionsgenaue Approximalkontakt befindet sich in der Lage der vormaligen Interfacefläche 5.

Gekennzeichnet sind die Höckerspitzen des oralen Höckers 14a und des bukkalen Höckers 14b. Der noch vorhandene Trennstegsockel 13 stört mit seinem seitlichen Überstand, der durch die Positionen 13a und 13b angezeigt wird, die Passung in der Regel nicht.

**Fig. 7** zeigt schematisch die Approximalfläche 7 des Inlays 6 und die Höckerspitzen 14a und 14b, d.h. die Ansicht des bearbeiteten restaurativen Segments 4 entlang der Kernachse auf die Approximalfläche 7.

Der äussere Umriss 13b des Trennstegsockels 13 bezeichnet die Lage und die Grösse des Trennstegsockels 13, mit der zentral kontaktbildenden Zone 4a und mit den Farbkodierungen 4b und 4c im kontaktfernen Bereich.

Der Sockelumriss 13b grenzt nach aussen die Farbkodierung 4c gegen das Material des übrigen restaurativen Segmentes 4 ab.

Die kontaktfernen farbkodierten Bereiche 4b und 4c ausserhalb der Region 4a können anhand der visuellen Unterscheidung der Farbschichtung kontrolliert manuell abrasiv abgetragen werden.

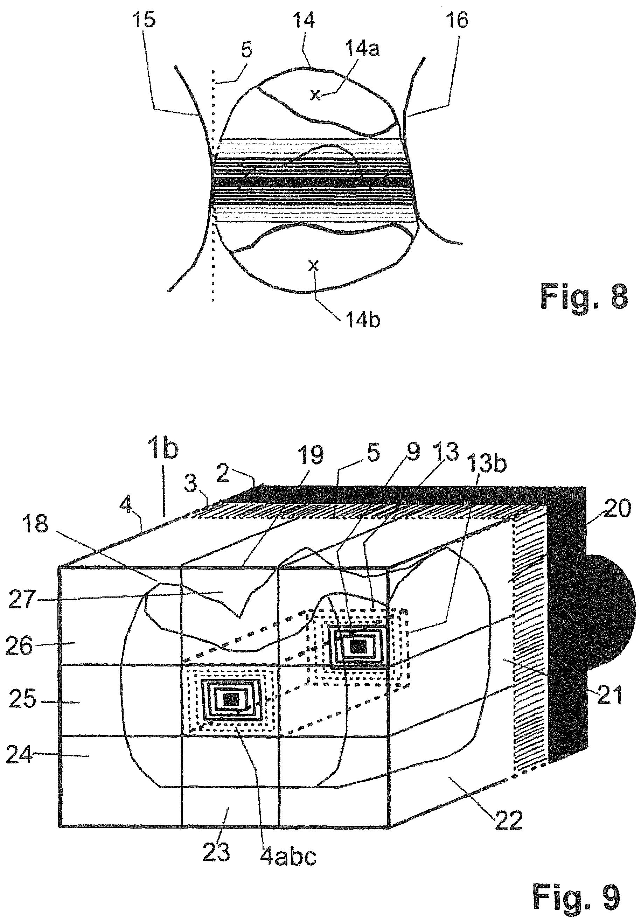

**Fig. 8** zeigt den Approximalkontakt des Inlays im Zahn 14 nach Abtragung des Trennstegsockels 13 mit dem Nachbarzahn 15 auf Höhe der ehemaligen Interfacefläche 5 zwischen dem Trennsegment 3 und dem restaurativen Segment 4. Die Markierung der Höckerspitzen 14a und 14b dient der Orientierung.

Die Farbkodierung des ehemaligen Trennstegsockels zieht sich unter der Kaufläche bis zum mesialen Nachbarzahn 16 hin und dient der farblichen Tönung der Kaufläche.

**Fig. 9** zeigt die schematische Ansicht eines Rohlings 1b für die Herstellung einer Krone im Seitenzahnbereich von der Frontfläche 19 des restaurativen Segmentes 4 aus gesehen.

Das Trennsegment 3 und der Halter 2 schliessen sich auf der abgewandten Seite an. Im restaurativen Segment 4 ist schematisch der Konstruktions-Umriss einer Seitenzahnkrone 18 dargestellt.

Diese Kronenkonstruktion wird numerisch wiederum so in das restaurative Segment 4 eingepasst, dass sie entsprechend dem hier beschriebenen Verfahren mit ihrem Approximalkontakt 9 die Interfacefläche 5 zwischen dem restaurativen Segment 4 und dem Trennsegment 3 berührt.

Die äussere Umrisslinie 13b bezeichnet die Grenze der kontaktfreien Zone des Trennstegsockels 13. Die Farbkodierung des Trennstegsockels 13 kann sich wiederum in der Mitte des restaurativen Segmentes 4 entlang der longitudinalen Rohlingsachse, d.h. der Kernachse, und der mesio-distalen Kronenachse bis auf die Frontfläche 19 fortsetzen und ist dann dort als Kernzone 4abc sichtbar.

Zur polychromatischen Modifikation der Kronenästhetik kann gegenüber einer monochromatischen Ausführung des restaurativen Segmentes 4 die farbkodierte Kernzone 4abc aus opaker Dentinmasse bestehen.

Auf jeder Seite der Kernzone 4abc kann diese durch Farbzonen unterschiedlicher Farb- und Helligkeitstönung beispielsweise wie folgt ergänzt werden.
- In der zervikalen Reihe: Schmelzmasse dunkel 22, Dentinmasse dunkel 23, Schmelzmasse dunkel 24.
- In der mittleren Reihe: Schmelzmasse mittlere Tönung beidseits 21, 25, zentral Dentin 4abc.
- In der okklusalen Reihe: Schmelzmasse hell beidseits 20, 26, zentral Schmelzmasse mittlere Tönung.

Durch die Umgebung mit Farbzonen unterschiedlicher Farb- und Opazitätsstufen hebt sich der Trennsockel visuell bei seiner manuell abrasiven Entfernung noch besser ab und erlaubt gleichzeitig eine polychromatische Gestaltung der Restauration.

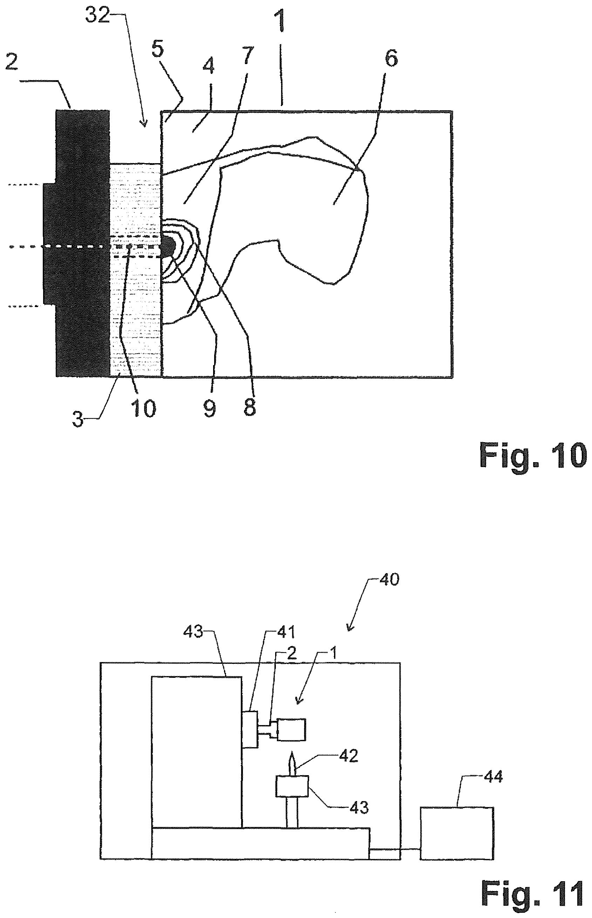

**Fig. 10** zeigt eine weitere Ausführung des Rohlings. Bei dieser Ausführung ist ein Teil der halterseitigen (d.h. der zum Halter 2 hin orientierten) Interfacefläche 5 des restaurativen Elements 4 freigelegt, d.h. nicht vom Trennsegment 3 bedeckt und mechanisch zugänglich ist. Dies hat den Vorteil, dass im Bearbeitungsgerät die Position dieser Interfacefläche 5 ausgemessen werden kann, was, wie weiter unten erwähnt, bei der Bearbeitung des Rohlings von Vorteil ist.

Eine solche Ausbildung ist z.B. dadurch möglich, dass das Trennsegment 3 in Richtung senkrecht zur Kernachse 10 einen kleineren Durchmesser besitzt als das restaurative Segment 4, insbesondere in mindestens einer Richtung senkrecht zur Kernachse 10.

Denkbar ist, dass, wie in Fig. 10 dargestellt, das Trennsegment 3 an mindestens einer Stelle ausgespart ist um eine Vertiefung 32 zwischen dem Halter 2 und dem restaurativen Element 4 zu bilden, in welcher die Interfacefläche 5 freigelegt und zum Ausmessen zugänglich ist.

### Herstellung

Im Rahmen der Herstellung des Rohlingsblocks kann das Trennsegment 3 beispielsweise zunächst mit dem Halter 2 stoff- und/oder formschlüssig verbunden und danach mit dem restaurativen Segment 4 verklebt werden.

Die Herstellung des Rohlingsblocks kann auch in einem ersten Schritt durch stoff- und/oder formschlüssige Verbindung des restaurativen Segmentes 4 mit einem industriell vorgefertigten transparenten und/oder eingefärbten Trennsegment 3 aus geeignetem Keramik-, Polymer- Komposit-, Hybrid- oder Glasmaterial erfolgen, wonach in einem zweiten Schritt der Rohlingsblock auf der Seite des Trennsegmentes 3 mit dem Halter 2 verbunden wird.

Die Herstellung des Rohlingsblocks kann auch durch das konsekutive Pressen von Keramikgranulaten unter Verwendung von unterschiedlichen Farben und/oder unterschiedlicher Transparenz sowie Opazität jeweils für das restaurative Segment 4 und das Trennsegment 3 erfolgen.

Werden sich visuell unterscheidende Trennsegmente 3 und restaurative Segmente 4 getrennt hergestellt, so können diese insbesondere mittels Glaslot verbunden werden und danach als Rohlingsblock (bestehend aus dem Trennsegment und dem restaurativen Segment) mit dem Halter 2 verklebt werden.

Das Trennsegment 3 kann auch aus einem preislich günstigen, in Bezug auf die Formschleifeigenschaften und die Festigkeit geeigneten nicht-dentalem Trennsegmentmaterial gefertigt werden.

Das Trennsegment 3 kann bei der Wahl eines Materials mit geeignetem Elastizitätsmodul die bei der Bearbeitung von Keramiken entstehenden Vibrationen dämpfen und zum ruhigen Lauf der Bearbeitung und zur Schonung dünn auslaufender Materialpartien beitragen.

Der Halter 2 und das Trennsegment 3 können in einer integrierten Form einstückig, d.h. aus einem Stück, ausgeformt werden, wenn das Material die Erfordernisse der Festigkeit, des präzisen Sitzes in der Schleifmaschine und der subtraktiv formenden Bearbeitung gleichzeitig erfüllt. Der Halter wird in diesem Fall gegenüber der Grenzfläche des restaurativen Segmentes um das Mass des Trennsegmentes axial verlängert.

Alternativ hierzu können der Halter 2 und das Trennsegment 3 aus unterschiedlichen Materialien bestehen. Beispielsweise kann der Halter 2 aus Metall sein.

### Bearbeitung

Die Bearbeitung des Rohlings erfolgt, wie erwähnt, in einem Bearbeitungsgerät, welches mindestens ein abrasives Werkzeug zum abrasiven Bearbeiten des Rohlings besitzt. Zwecks Herstellung des Werkstücks durchläuft das entsprechende Verfahren die folgenden Schritte:
- Bereitstellung eines Datensatzes, der eine Aussenform des Werkstücks beschreibt,
- numerische Einpassung der Aussenform in das restaurative Segment 4 derart, dass eine Oberfläche der Aussenform in einem Kontakt, insbesondere einen Approximalkontakt, 9 in eine Interfacefläche 5 zwischen dem Trennsegment 3 und dem restaurativen Segment 4 zu liegen kommt,
- mechanisches Abtragen von Material des restaurativen Segments 4 zur eingepassten Aussenform, mit Ausnahme eines Trennstegsockels um den Approximalkontakt 9,
- Entfernen des Trennsegments 3 vom restaurativen Segment 4 und
- Bearbeiten des restaurativen Werkstücks 6 im erwähnten Trennstegsockel.

Mit Vorteil wird im Bearbeitungsgerät die Position der halterseitigen Interfacefläche 5 des restaurativen Elements 4 abgetastet, und zwar die Position in Richtung der Kernachse 10. Dazu sollte die Interfacefläche 5, wie oben erwähnt, freigelegt sein. Die Messung dieser Position ist deshalb von Vorteil, weil dadurch die Aussenform des Werkstücks genau an die Interfacefläche 5 angelegt werden kann, d.h. die Aussenform kann so präzise in das restaurative Segment eingepasst werden. Die Fertigungstoleranzen des Trennsegments 3 und der Klebeverbindungen 33, 34 werden durch diese Kalibrierung eliminiert.

Die Abtastung der Position der halterseitigen Interfacefläche 5 geschieht mit Vorteil dadurch, dass ein Bearbeitungswerkzeug des Bearbeitungsgeräts von der Seite des Halters 2 her an die Interfacefläche 5 herangeführt wird, bis ein mechanischer Kontakt entsteht. Die Werkzeugposition beim Stattfinden dieses Kontakts definiert die Position der Interfacefläche 5.

Ein Bearbeitungsgerät 40 zum Durchführen des Verfahrens ist in Fig. 11 dargestellt. Es besitzt eine Befestigungsvorrichtung 41, an welcher der Halter 2 des Rohlings 1 befestigt werden kann, mindestens ein abrasives Bearbeitungswerkzeug 42 zum Bearbeiten des restaurativen Elements 4 und des Trennsegments 3. Weiter sind Antriebsvorrichtungen 43 vorgesehen, um den Rohling 1 und das Werkzeug 42 zu Bearbeitung gegeneinander zu bewegen.

Das Bearbeitungsgerät 40 besitzt ausserdem eine Steuerung 44, welche (z.B. durch entsprechende Steuerprogramme) dazu ausgestaltet ist, die Schritte des beschriebenen Bearbeitungsverfahrens durchzuführen, indem sie die Komponenten des Bearbeitungsgeräts 40 entsprechend steuert.

### Bemerkungen

Wie erwähnt, kann das Trennsegment 3 den gleichen Umriss aufweisen wie der Halter 2 und/oder das restaurative Segment 4. Alternativ dazu kann das Trennsegment 3 jedoch in Richtung senkrecht zur Kernachse 10 auch einen kleineren Durchmesser besitzen als das restaurative Segment 4.

Auf diese Weise kann die Zeit zum Bearbeiten des Trennsegments 3 reduziert oder sogar eliminiert werden.

Das Trennsegment 3 kann gegenüber dem restaurativen Segment 4 aus jedem farblich und /oder in Bezug auf die Opazität und Transluzenz unterschiedlichem Material bestehen, welches gegebenenfalls die Anforderungen der präzisen subtraktiven Bearbeitbarkeit und Festigkeit des im restaurativen Segments verwendeten Materiales erfüllt.

Das adhäsive Verbundmedium (Adhäsiv, z.B. Glaslot) zwischen dem restaurativen Segment 4 und dem Trennsegment 3 des Rohlings unterscheidet sich farblich mit Vorteil sowohl vom restaurativen Segment 4 als auch vom Trennsegment 3, z.B. indem es mit starken Pigmenten, eingefärbt ist. So wird die Interfacefläche zwischen den beiden Segmenten gekennzeichnet und die Verarbeitung vereinfacht.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Verfahren zum Bearbeiten eines Rohlingsblocks zur Herstellung eines Werkstücks, wobei der Rohlingsblock ein restauratives Segment (4) aus bearbeitbarem Zahnersatzmaterial aufweist, sowie einen Halter (2) zum Einspannen des Rohlingsblocks in ein Bearbeitungsgerät, wobei zwischen dem Halter (2) und dem restaurativen Segment (4) ein Trennsegment (3) aus einem bearbeitbarem Trennsegmentmaterial angeordnet ist, wobei sich das Trennsegmentmaterial visuell vom Zahnersatzmaterial unterscheidet,
wobei das Verfahren folgende Schritte aufweist:
Bereitstellung eines Datensatzes, der eine Aussenform des Werkstücks beschreibt,
numerische Einpassung der Aussenform in das restaurative Segment (4) derart, dass eine Oberfläche der Aussenform in Kontakt, insbesondere Approximalkontakt (9), mit einer Interfacefläche (5) zwischen dem Trennsegment (3) und dem restaurativen Segment (4) zu liegen kommt,
mechanisches Abtragen von Material des restaurativen Segments (4) zur eingepassten Aussenform, mit Ausnahme eines Trennstegsockels um den Kontakt bzw. den Approximalkontakt (9),
Entfernen des Trennsegments (3) vom restaurativen Segment (4),
Bearbeiten des restaurativen Werkstücks (6) im erwähnten Trennstegsockel.

2. Verfahren nach Anspruch 1, wobei vor, nach oder während dem mechanischen Abtragen von Material des restaurativen Segments (4) auch ein mechanisches Abtragen von Material des Trennsegments (3) erfolgt, und zwar derart, dass sich ein Trennsteg (3b, 3c) zwischen dem Halter (2) und dem Trennstegsockel des restaurativen Segments (4) bildet.

3. Verfahren nach einem der Ansprüche 1 oder 2, wobei das Entfernen mindestens eines Teils des Trennsegments (3) mittels chemischer Auflösung des Trennsegments (3), Verbrennen des Trennsegments (3), Schmelzen des Trennsegments (3) oder Auftrennen eines Verbunds zwischen dem Trennsegment (3) und dem restaurativen Segment (4) erfolgt.

4. Verfahren nach einem der Ansprüche 1 bis 3, wobei die Position der halterseitigen Interfacefläche (5) des restaurativen Elements (4) abgetastet wird, um die Aussenform in das restaurative Segment einzupassen.

5. Verfahren nach einem der vorangehenden Ansprüche, wobei der Halter (2) und das Trennsegment (3) aus einem Stück sind.

6. Kombination aus einem Bearbeitungsgerät und einem Rohlingsblock zum Durchführen des Verfahrens nach einem der vorangehenden Ansprüche,
wobei der Rohlingsblock ein restauratives Segment (4) aus bearbeitbarem Zahnersatzmaterial aufweist, sowie einen Halter (2) zum Einspannen des Rohlingsblocks in das Bearbeitungsgerät, wobei zwischen dem Halter (2) und dem restaurativen Segment (4) ein Trennsegment (3) aus einem bearbeitbarem Trennsegmentmaterial angeordnet ist, wobei sich das Trennsegmentmaterial visuell vom Zahnersatzmaterial unterscheidet,
und wobei das Bearbeitungsgerät aufweist
eine Befestigungsvorrichtung (41) zur Befestigung des Halters (2) des Rohlings (1),
mindestens ein abrasives Bearbeitungswerkzeug (42) zum Bearbeiten des restaurativen Elements (4) und des Trennsegments (3) und
Antriebsvorrichtungen (43), um den Rohling (1) und das Werkzeug (42) zu Bearbeitung gegeneinander zu bewegen
**gekennzeichnet durch** eine Steuerung (44) ausgestaltet zum Durchführen der Schritte des Verfahrens, indem sie dazu ausgestaltet ist, den Datensatz zu verarbeiten und die Aussenform in das restaurative Segment (4) numerisch einzupassen, derart dass eine Oberfläche der Aussenform in Kontakt, insbesondere Approximalkontakt (9), mit einer Interfacefläche (5) zwischen dem Trennsegment (3) und dem restaurativen Segment (4) zu liegen kommt.

7. Verwendung eines Rohlingsblocks aufweisend
- ein restauratives Segment (4) aus bearbeitbarem Zahnersatzmaterial,
- einen Halter (2) zum Einspannen des Rohlingsblocks in das Bearbeitungsgerät,
- ein zwischen dem Halter (2) und dem restaurativen Segment (4) angeordnetes Trennsegment (3) aus einem bearbeitbarem Trennsegmentmaterial, wobei sich das Trennsegmentmaterial visuell vom Zahnersatzmaterial unterscheidet, und wobei der Halter (2) und das Trennsegment (3) aus einem Stück sind,
im Verfahren nach einem der Ansprüche 1 bis 5.

## Claims

1. Method for machining a blank block for manufacturing a workpiece, wherein the blank block has a restoration segment (4) made of workable dental replacement material, as well as a holder (2) for fixing the blank block to a machining device, wherein a partition segment (3) made of a workable partition segment material is arranged between the holder (2) and the restoration segment (4), wherein the partition segment material differs visually from the dental replacement material,
wherein the method has the following steps:
- providing a data set describing an outer shape of the workpiece,
- numerically fitting the outer shape into the restoration segment (4) such that a surface of the outer shape comes to lie, in contact, in particular proximal contract (9), with an interface plane (5) between the partition segment (3) and the restoration segment (4),
- mechanically removing material from the restoration segment (4) up to the outer shape, excluding a partition-pin-base around the contact or proximal contact (9),
- removing the partition segment (3) from the restoration segment (4),
- machining the workpiece (6) in said partition-pin-base.

2. Method of claim 1, wherein before, after or during mechanically removing material from the restoration segment (4), a mechanical removal of material from the partition segment (3) occurs as well, namely such that a partition pin (3b, 3c) is formed between the holder (2) and the partition-pin-base of the restoration segment (4).

3. Method of any of the claims 1 or 2, wherein the removal of at least part of the partition segment (3) occurs by means of chemically dissolving the partition segment (3), by means of burning the partition segment (3), by means of melting the partition segment (3) or splitting a bond between the partition segment (3) and the restoration segment (4).

4. Method of any of the claims 1 to 3, wherein the position of the holder-sided interface plane (5) of the restoration element (4) is sampled in order to fit the outer shape into the restoration segment.

5. Method of any of the preceding claims, wherein the holder (2) and the partition segment (3) are in one piece.

6. Combination of a machining device and a blank block for carrying out the method according to one of the preceding claims,
wherein the blank block has a restorative segment (4) made of workable dental replacement material as well as a holder (2) for fixing the blank block to the machining device, wherein a partition segment (3) made of a workable partition segment material is arranged between the holder (2) and the restoration segment (4), wherein the partition segment material differs visually from the dental replacement material,
and wherein the machining device has
an attachment device (41) for attaching the holder (2) of the blank (1), at least one abrasive machining tool (42) for machining the restoration element (4) and the partition segment (3),
drives (43) for moving the blank (1) and the tool (42) in respect to each other for machining,
**characterized by** a control unit (44) adapted to carry out the steps of the method, being adapted to process the data set and to numerically fit the outer shape into the restorative segment (4), in such a way that a surface of the outer shape comes to lie in contact, particularly proximal contact (9), with an interface surface (5) between the partition segment (3) and the restorative segment (4).

7. Use of a blank block having
- a restorative segment (4) made of workable dental replacement material,
- a holder (2) for fixing the blank block to the machining device,
- a partition segment (3) made of a workable partition segment material and arranged between the holder (2) and the restoration segment (4), wherein the partition segment material differs visually from the dental replacement material, and wherein the holder (2) and the partition segment (3) are in one piece,
in the method according to one of the claims 1 to 5.

## Revendications

1. Procédé d'usinage d'un bloc brut pour la fabrication d'une pièce à usiner, dans lequel le bloc brut présente un segment de restauration (4) en matériau de remplacement dentaire usinable, ainsi qu'un support (2) pour fixer le bloc brut à un dispositif d'usinage, un segment de cloison (3) en matériau de segment de cloison usinable étant disposé entre le support (2) et le segment de restauration (4), le matériau du segment de cloison différant visiblement du matériau de remplacement dentaire,
le procédé comportant les étapes suivantes:
- fournir un ensemble de données décrivant une forme extérieure de la pièce,
- ajuster numériquement la forme extérieure dans le segment de restauration (4) de telle sorte qu'une surface de la forme extérieure vient se poser, en contact, particulièrement en contact proximal (9), avec un plan d'interface (5) entre le segment de séparation (3) et le segment de restauration (4),
- enlever mécaniquement du matériau du segment de restauration (4) jusqu'à la forme extérieure, à l'exclusion d'une base de cloison à broches autour du contact ou du contact proximal (9),
- retirer le segment de cloison (3) du segment de restauration (4),
- usiner la pièce à usiner (6) dans la base de la broche de cloison.

2. Procédé selon la revendication 1, dans lequel, avant, après ou pendant l'enlèvement mécanique du matériau du segment de restauration (4), un enlèvement mécanique du matériau du segment de cloison (3) se produit également, à savoir qu'une tige de cloison (3b, 3c) est formée entre le support (2) et la base de cloison à broches du segment de restauration (4).

3. Procédé selon l'une quelconque des revendications 1 ou 2, dans lequel l'enlèvement d'au moins une partie du segment de cloison (3) s'effectue par dissolution chimique du segment de cloison (3), par combustion du segment de cloison (3), par fusion du segment de cloison (3) ou par séparation d'une liaison entre le segment de cloison (3) et le segment de restauration (4).

4. Procédé selon l'une quelconque des revendications 1 à 3, dans lequel la position du plan d'interface (5) de l'élément de restauration (4) du côté du support est échantillonnée afin d'adapter la forme extérieure dans le segment de restauration.

5. Procédé de l'une quelconque des revendications précédentes, dans lequel le support (2) et le segment de cloison (3) sont en une seule pièce.

6. Combinaison d'un dispositif d'usinage et d'un bloc brut pour l'exécution du procédé selon l'une des revendications précédentes,
dans laquelle le bloc brut présente un segment de restauration (4) en matériau de remplacement dentaire usinable ainsi qu'un support (2) pour fixer le bloc brut au dispositif d'usinage, un segment de cloison (3) en matériau de segment de cloison usinable étant disposé entre le support (2) et le segment de restauration (4), le matériau du segment de cloison étant visuellement différent du matériau de remplacement dentaire,
et dans lequel le dispositif d'usinage a
un dispositif de fixation (41) pour fixer le support (2) de l'ébauche (1),
au moins un outil d'usinage abrasif (42) pour usiner l'élément de restauration (4) et le segment de cloison (3),
des entraînements (43) pour déplacer l'ébauche (1) et l'outil (42) l'un par rapport à l'autre pour l'usinage,
**caractérisé par** une unité de commande (44) adaptée pour effectuer les étapes du procédé, étant adaptée pour traiter l'ensemble de données et pour adapter numériquement la forme extérieure dans le segment de restauration (4), de telle sorte qu'une surface de la forme extérieure vient en contact, en particulier le contact proximal (9), avec une surface d'interface (5) entre le segment de cloison (3) et le segment de restauration (4).

7. Utilisation d'un bloc brut ayant
- un segment de restauration (4) fait d'un matériau de remplacement dentaire usinable,
- un support (2) pour fixer le bloc brut sur le dispositif d'usinage,
- un segment de cloison (3) constitué d'un matériau de segment de cloison usinable et disposé entre le support (2) et le segment de restauration (4), dans lequel le matériau du segment de cloison diffère visuellement du matériau de remplacement dentaire, et dans lequel le support (2) et le segment de cloison (3) sont en une pièce,
dans le procédé selon l'une des revendications 1 à 5.
